# EUROPEAN PATENT APPLICATION

(11) **EP 1 415 937 A1**
(43) Date of publication of application: **06.05.2004**
(21) Application number: 03425696.6
(22) Date of filing: 28.10.2003
(51) Int. Cl.: B65F 1/10, B65F 1/14

(54) **An automatic device for collecting rubbish in a differentiated manner**

(30) Priority: 29.10.2002 IT MI20022293
(71) Applicant: GB Gest S.r.l., 25060 Collebeato (Brescia) (IT)
(72) Inventor: Bragadina, Giovanni, 25060 Collebeato (BS) (IT)
(74) Representative: Tansini, Elio Fabrizio

(57) **Abstract**

An automatic device for collecting rubbish in a differentiated manner comprises a plurality of rubbish containers (4), means (6) for transferring the rubbish between a loading station (5) and a plurality of unloading stations (7) each of them being disposed at one of the containers (4), data acquisition means (11) to acquire at least one datum relating to the type of waste material conveyed to the device in the loading station (5), and a processing and control unit (13) operatively connected to the data acquisition means (11). The transferring means (6) comprises at least one transportation shuttle (10) movable along a preestablished path (P) between the loading station (5) and the unloading stations (7) and guide and handling means (14) to move the shuttle (10) along the preestablished path (P) and connected with the processing and control unit (13), to unload the waste material into one of the containers (4) selected on the basis of the datum relating to the rubbish type conveyed to the device.

## Description

The present invention relates to an automatic device for collecting rubbish in a differentiated manner, of the type comprising the features set out in the preamble of claim 1.

The present invention falls within the scope of collection, sorting and treatment of urban rubbish.

It is known that the first step to be carried out for recycling waste materials originating from urban rubbish is that of dividing it into categories, which operation is to be conveniently executed since the beginning when rubbish is gathered to be disposed of.

For the purpose automatic devices for collecting urban rubbish in a differentiated manner are known which stimulate users to carry out such a sorting operation.

The automatic devices of known type comprise a series of containers each dedicated to collection of one type of waste, such as paper, glass, tins, batteries, etc. for example. Containers are grouped in a holding structure placed at the ground level or planted in the ground, provided with an interface unit with the user and with one or more doors to insert the waste product to be eliminated. The interface unit allows the user to supply the device with a piece of information concerning the type of waste that one intends to introduce thereinto.

Said devices further comprise an identification unit through which the user is identified and authorized to use the device itself. Identification enables the behaviour of each individual to be monitored in order to calculate diversified rates relating to the rubbish tax for each family.

Automatic devices for rubbish collection in a differentiated manner are known which have a plurality of doors for rubbish insertion, each corresponding to a respective container. A management control box, connected with the interface unit and with appropriate opening mechanisms, opens the door corresponding to the selected container based on the rubbish type that the user intends to introduce into the device.

The above described devices are rather complicated and bulky, because each container must be provided with an access door and respective chute. In addition, use of same is not very practical because the user must identify the unlocked door in which the rubbish fraction is to be inserted. For the same reason it is not suitable to make devices as above described provided with many containers.

Also known are automatic devices for rubbish collection in a differentiated manner that comprise a weighing machine to weigh the solid rubbish, and a pressing member capable of compressing the rubbish itself before throwing it into the container dedicated thereto. These devices usually provide a limited number of containers (two or four) and one or two chambers provided with respective access doors.

Each chamber internally comprises both the weighing machine and the pressing member and is in addition able to sort out the waste material through appropriate movable walls, and put it into one of the containers connected thereto. The container number and therefore the typologies of waste materials accepted is limited by the sizes of the chamber that can be brought into communication with no more than two or three containers. Use of a high number of containers contemplates the presence of many automated chambers, which will bring about an increase in costs for the device production and management.

Finally, also known are automatic devices for urban rubbish collection in a differentiated manner which have a single door for introduction of the waste material, provided with a chute alternately communicating with a series of movable containers, gathered on a turntable for example.

A management control box connected with the interface unit and with appropriate motors, carries out displacement of the containers until bringing the right one, selected on the basis of the rubbish type, in close proximity with the chute. These devices too are generally provided with a weighing machine and with appropriate pressing members. Such a device is described in document EP 0 799 152, for example.

The main drawback of the last mentioned type of devices is connected with the complexity and cost of the container-handling members; therefore the container number and sizes are limited.

The Applicant has found that the known devices of the above described type are susceptible of improvements under different points of view, in particular in connection with the number, sizes and arrangement of the containers, simplicity of use by the user and cheapness of the devices themselves.

Accordingly, the present invention aims at proposing an automatic device for rubbish collection in a differentiated manner that is able to solve the above mentioned problems.

In particular, it is an aim of the present invention to propose an automatic device for rubbish collection in a differentiated manner that allows use of a high number of containers and is therefore able to receive many types of waste materials (glass, tins, plastics, paper, batteries, medicaments, etc.).

It is a further aim of the present invention to provide an automatic device for rubbish collection in a differentiated manner enabling use of containers of different cubic volumes.

It is another aim of the present invention to manufacture an automatic device for collecting rubbish in a differentiated manner that can be easily utilized by the user.

Yet another aim of the present invention is to provide an automatic device for collecting rubbish in a differentiated manner that is simple and can be easily adapted to different use requirements also depending on the available room for installation.

The foregoing and still further aims that will become more apparent in the course of the following description are attained by an automatic device for collecting rubbish in a differentiated manner, comprising the features set out in the characterizing portion of claim 1.

Further features and advantages will be best understood from the detailed description of an automatic device for collecting rubbish in a differentiated manner, in accordance with the present invention. This description will be taken hereinafter with reference to the accompanying drawings given by way of non-limiting example, in which:
- Fig. 1 is an elevation view partly in section of an automatic device for collecting rubbish in a differentiated manner in accordance with a first embodiment of the present invention;
- Fig. 2 shows the device being the subject of the present invention, seen in the direction of arrow A in Fig. 1;
- Fig. 3 shows the device in Fig. 1 in accordance with an alternative embodiment thereof, with some parts removed in order that others may be rendered more prominent;
- Fig. 4 shows the device in question sectioned along line IV-IV in Fig. 3;
- Fig. 5 shows a first portion of the device seen in Fig. 3 to an enlarged scale;
- Fig. 6 shows a second enlarged portion of the device seen in Fig. 3;
- Fig. 7 shows a detail seen in Fig. 4, to an enlarged scale;
- Fig. 8 is a perspective view of a second embodiment of the device in accordance with the present invention, with some parts removed in order that others may be rendered more prominent;
- Fig. 9 is an elevation view of the device shown in Fig. 8;
- Fig. 10 shows an enlarged portion of the device in Fig. 8;
- Fig. 11 is a perspective view of a set of elements of the device in Fig. 8; and
- Fig. 12 shows the set of elements in Fig. 11 with a further element removed, in order that others may be rendered more prominent.

With reference to the drawings, an automatic device for collecting rubbish in a differentiated manner in accordance with the present invention has been generally identified by reference numeral 1.

The automatic device 1 comprises a holding structure 2 possibly provided with a plurality of access doors 3, each dedicated to insertion or removal of a container 4 for urban rubbish. Each container 4 is utilised for receiving a single type of rubbish, such as paper, glass, plastics, tins, batteries, drugs, clothes, etc., for example, or an assembly of rubbish fractions, such as glass and aluminium tins for example, to be introduced through a collecting opening 4a disposed at the top.

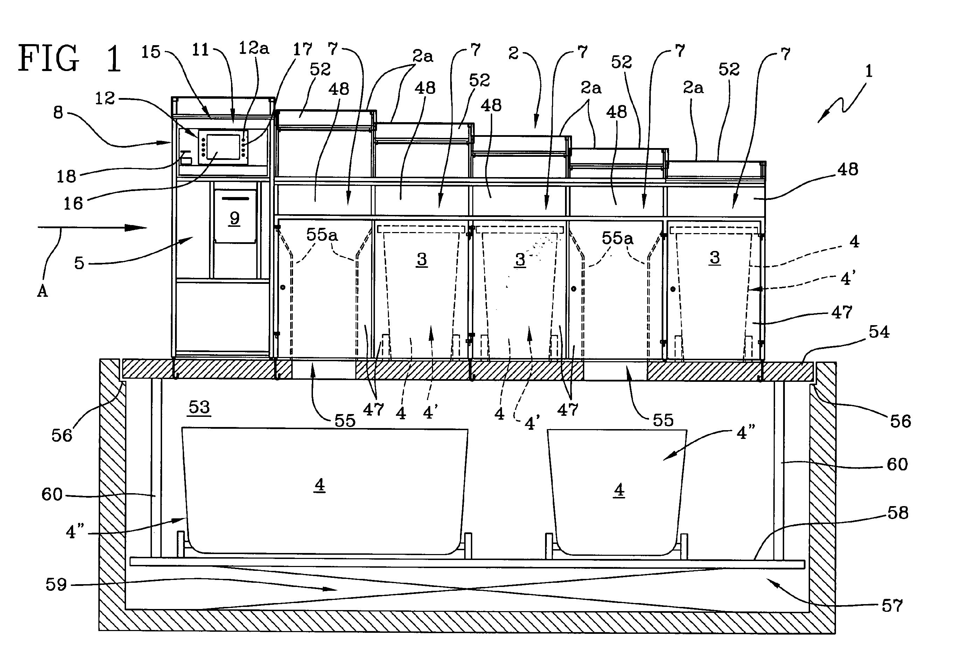

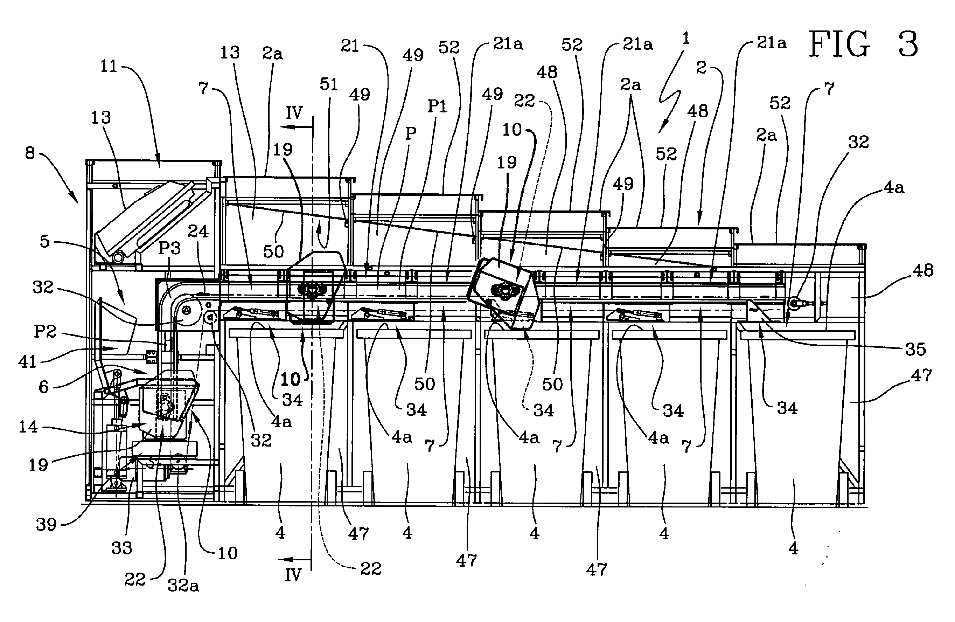

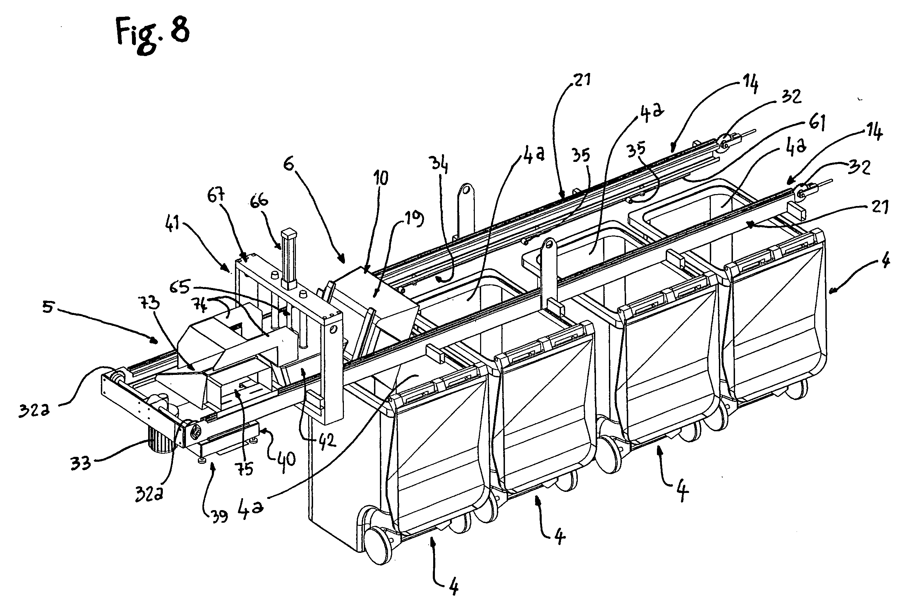

In the variant shown in Fig. 3 and in the second embodiment in Fig. 8 containers 4 are disposed at the ground level and have the respective openings 4a at a raised position, whereas in the first embodiment shown in Fig. 1 device 1 has at least two series of containers of different shapes and sizes, possibly even at the inside of each series, with the containers 4 belonging to the second series that are disposed under the ground level or in any case at a lower position with respect to the containers belonging to the first series. However it is also possible to provide a single series of containers 4 all disposed under the ground level.

Device 1 further comprises a loading station 5 at which a user U may introduce the waste materials to be eliminated into the device itself.

Suitable transfer means 6 carries the waste materials between the loading station 5 and a plurality of unloading stations 7, each of them being disposed in close proximity with one of the containers 4.

In accordance with the embodiments shown, the loading station 5 is located in a portion 8 of the holding structure 2, called "column", which has a door 9 for conveying the waste material to device 1.

Advantageously, the transfer means 6 comprises at least one transportation shuttle 10 movable along a preestablished path P between the loading station 5 at which shuttle 10 receives the waste material conveyed by user U through door 9, and the unloading stations 7.

Device 1 is further provided with a data acquisition means 11 to acquire at least one datum relating to the type of solid rubbish conveyed to device 1 in the loading station 5.

The acquisition means 11 can consist for example of an apparatus capable of identifying the type of rubbish introduced, without for the purpose requiring any action by user U.

Alternatively, device 1 has a user interface 12 provided with data input means 12a, to allow inputting or manual selection of data relating to the type of the conveyed waste material.

A processing and control unit 13, operatively connected with the data acquisition means 11 is able to operate appropriate guide and handling means 14 for moving shuttle 10 along the preestablished path P, to unload the waste material into one of containers 4, selected on the basis of the datum relating to the conveyed rubbish type.

Preferably, also interlocked with the processing and control unit 13 is identification means 15 through which user U is identified and authorised to use device 1. By way of example, the identification means 15 may comprise a magnetic, optic or electromagnetic code, reproduced on a badge or other appropriate medium with which user U is supplied, that can be identified through a reader associated with the user interface 12. Alternatively, the code can be manually inputted to the user interface 12 through a keyboard, a touch-screen, a reader of fingerprints or the like.

In the embodiments shown the user interface 12 comprises a display 16, a keyboard 17 and a magnetic-badge reader 18 mounted on column 8, over door 9 (Fig. 1), and it performs the functions both of the identification means 15 and of the data acquisition means 11.

Advantageously, shuttle 10 comprises a vessel 19 provided with a bottom wall 19a, four side walls 19b and an usually upwardly-facing loading and unloading opening 20.

Vessel 19 is movable over the plurality of containers 4 and is also rotatable about its own horizontal rotation axis X between a loading and transportation position at which its loading and unloading opening 20 faces upwardly and an unloading position angularly rotated relative to the loading position and at which at least one of the side walls 19b has a descending extension being oriented in the direction of opening 20.

The side walls 19b of vessel 19 can diverge from bottom 19a towards opening 20. In particular, in the embodiments shown one of the side walls 10b disposed below in the unloading position forms an obtuse angle with the bottom wall 19a to facilitate rubbish unloading.

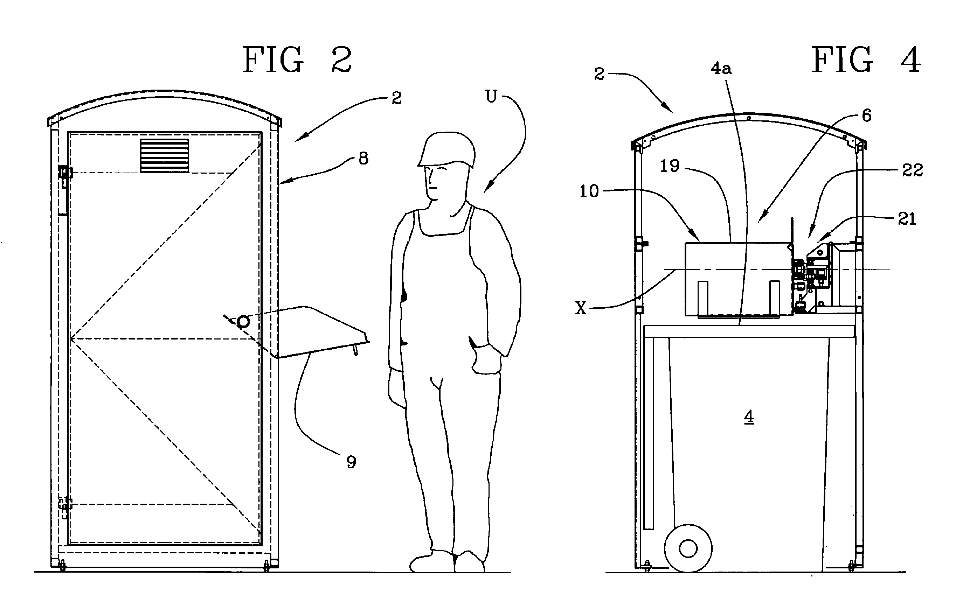

In the first embodiment and in the variant shown in Figs. 1 to 7, the guide and handling means 14 supporting shuttle 10 comprises a guide 21 having a first rail 21a and a second rail 21b spaced from each other and between which hooking means 22 is arranged to engage shuttle 10 in a slidable and rotatable manner around the horizontal rotation axis X.

Guide 21 extends along the preestablished path P that, in the embodiments shown in Figs. 1 to 7, consists of a main straight stretch P1, extending over containers 4 in mutual alignment, and a substantially vertical auxiliary stretch P2 disposed at the loading station 5 and connected with the main stretch by a curvilinear union piece P3.

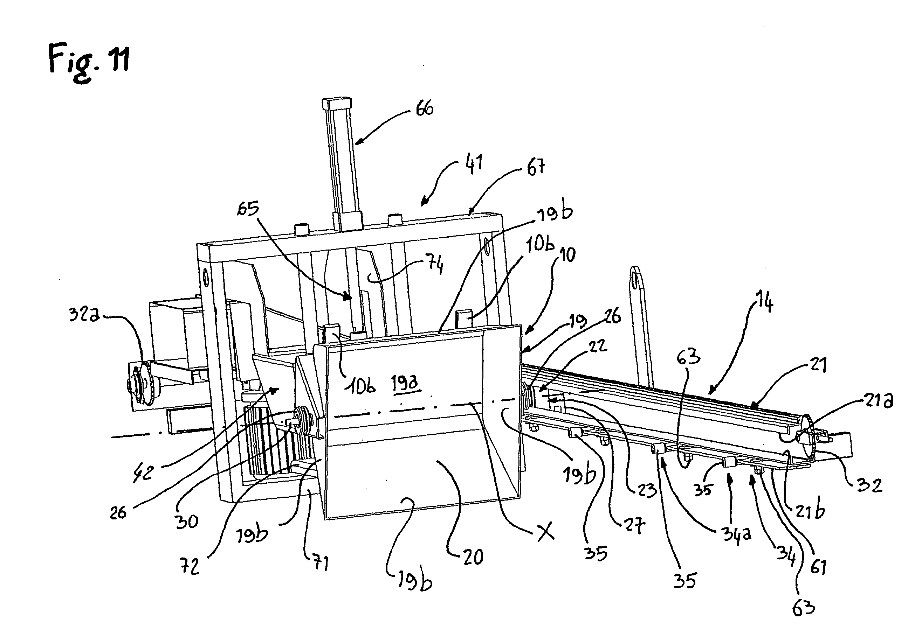

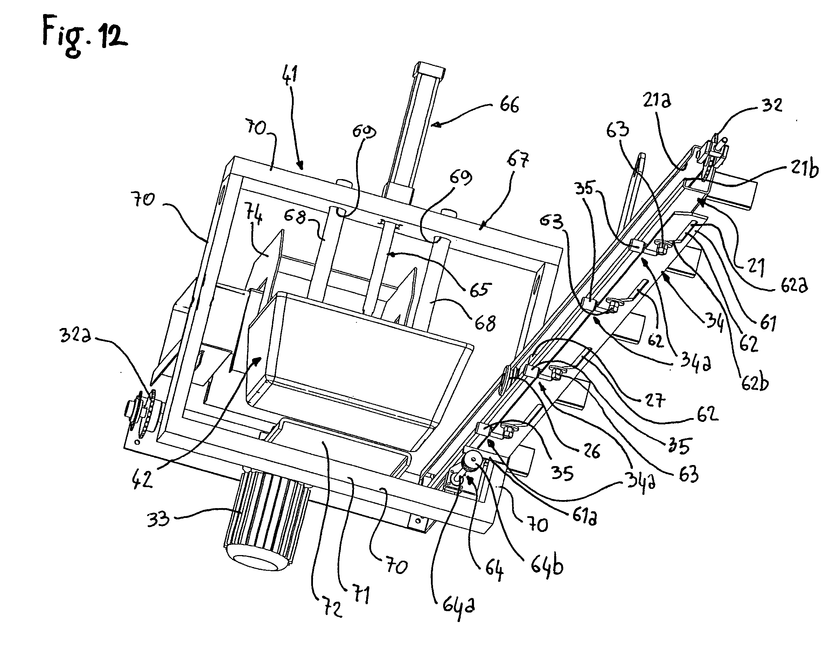

In the second embodiment shown in Figs. 8 to 12, the guide and handling means 14 supporting shuttle 10 comprises a pair of straight guides 21 mutually parallel and placed at the opposite sides of shuttle 10. Each guide 21 has a C-shaped conformation in cross section (Figs. 11 and 12) defining the first rail 21a and the second rail 21b between which the hooking means 22 is housed. Unlike the first embodiment, the preestablished path P of the second embodiment is defined by a single straight stretch substantially extending in a horizontal plane over containers 4.

The extension of guide 21 may in any case take more complicated shapes to adapt itself to the arrangement of containers 4. For instance, the main stretch P1 may form a U-shaped path or a circuit closed upon itself in a horizontal plane.

For the purpose, guide 21 may advantageously be formed of a plurality of modules 21a each of them being associated with a modular portion 2a of the holding structure 2, to define respective loading stations that can be associated in a modular manner one after the other to form holding structures 2 and preestablished paths P of the desired shape and length.

In both embodiments, the hooking means 22 comprises a carriage 23 slidably inserted in guide 21, rotatably coupled with vessel 19 about the horizontal rotation axis X and rigidly connected to a handling chain 24.

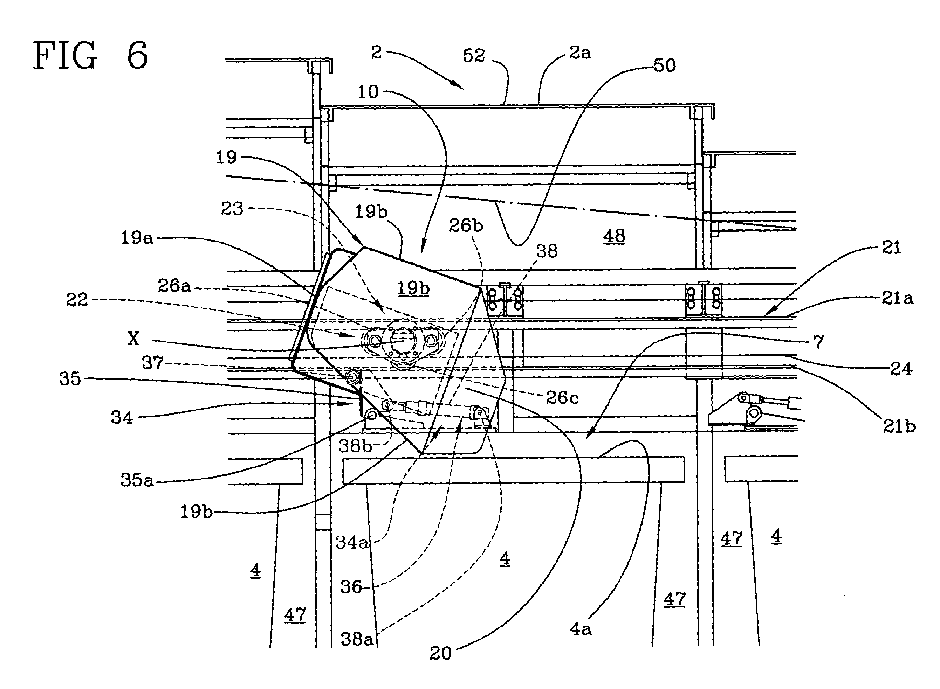

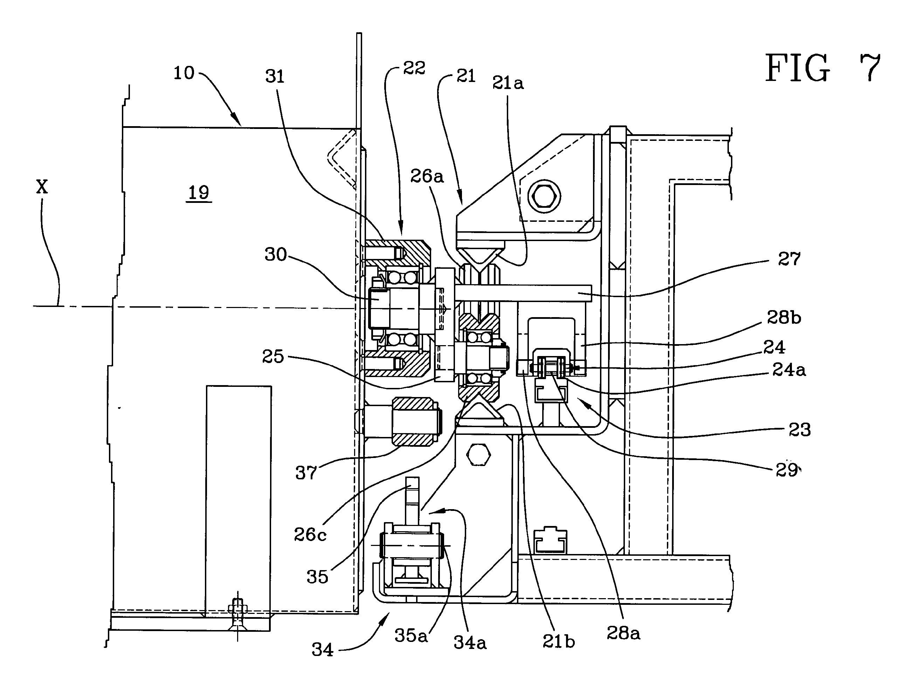

According to the first embodiment shown in Figs. 6 and 7, carriage 23 has a central portion 25 on which three wheels 26a, 26b, 26c lying in a single plane are idly mounted following a triangular diagram. Two 26a, 26b of the three wheels roll on the first rail 21a whereas the third wheel 26c, interposed between the two other wheels, rolls on the second rail 21b.

Rigidly mounted on the central portion 25 is a tailpiece 27 having a pair of arms 28a, 28b between which engagement of chain 24 takes place through at least one pin 29 passing through one of the chain meshes.

On the opposite side from the tailpiece 27, carriage 23 has a shaft 30 rigidly connected with the central portion 25 and rotatably engaged in a bell 31 fastened to vessel 19. The horizontal rotation axis X is coincident with the longitudinal axis of shaft 30 and is advantageously placed at a raised position with respect to the mass centre of gravity of shuttle 10, in a filling condition too, so that said shuttle will tend to spontaneously keep the loading and transportation position by gravity.

In the second embodiment, as visible in Figs. 11 and 12 in which only one of the two guides 21 has been shown for the sake of clarity, each of the two carriages 23 placed at the sides of shuttle 10 comprises a single wheel 26 coupled with a predetermined backlash with both the rails 21a, 21b and idly mounted on a shaft 30 rigidly connected to the shuttle itself.

The tailpiece 27 to which the chain, not shown, is linked is slidably inserted in the hollow defined by the C conformation of guide 21 and connected to shaft 30, so that the chain can drag shuttle 10. During motion of shuttle 10, wheels 26 roll on the second rails 21b.

In all embodiments chain 24, only represented in Figs. 3, 5, 6 and 7, is passed over respective gear wheels 32 and has a branch 24a extending parallel to rails 21a, 21b and between the rails 21a, 21b themselves where it is linked to the tailpiece 27 of carriage 23.

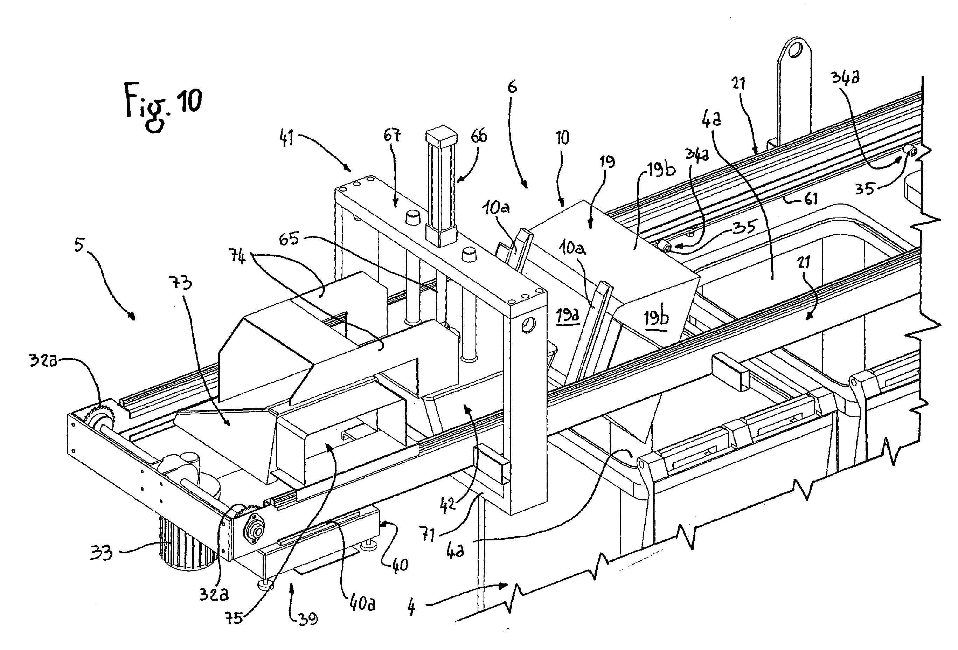

One of the gear wheels 32a is operatively connected with a motor 33 capable of moving the wheel 32a itself, and consequently chain 24 and shuttle 10, in the two ways. In the second embodiment in Fig. 10, the driving gear wheels 32a of the two chains are connected with a single motor 33 positioned close to the loading station 5.

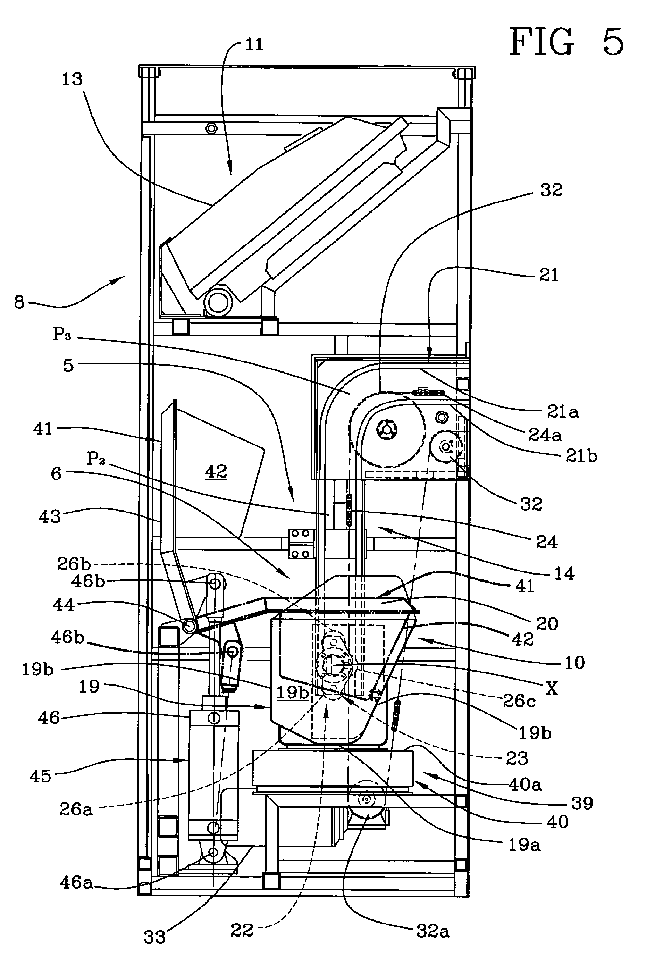

In the first embodiment in Figs 3 and 5, motor 33 is preferably positioned at a lower portion of the vertical auxiliary stretch P2, at the inside of column 8.

Device 1 further comprises means for overturning of shuttle 10 between a loading and transportation position and an unloading position, at which shuttle 10 is angularly rotated relative to the loading and transportation position, to cause unloading of the waste materials into the collecting opening 4a of the selected container 4 (Figs. 6 and 10).

In more detail, a plurality of overturning members 34a is provided, each of which is associated with one of the modular unloading stations 7 and mounted close to the respective container 4, at one of modules 21a of guide 21 to move shuttle 10 around the horizontal rotation axis X thereof.

In accordance with the first embodiment, referring particularly to Fig. 6, each of the overturning members 34a comprises a tailpiece 35 rotatably mounted on the holding structure 2, at a hinge 35a, and moved by an actuator 36.

The tailpiece 35 is movable between a rest position, at which it is spaced apart from the preestablished path P in order not to interfere with shuttle 10, and an operating position at which the tailpiece 35 is disposed close to the preestablished path P in order to interfere with a pin 37 mounted on vessel 19, at an appropriate distance from the rotation axis X.

Interference between the pin 37 of shuttle 10 moving forward on guide 21 and the tailpiece 35 causes rotation of the shuttle itself about the rotation axis X.

The actuator 36 of the tailpiece 35 is advantageously defined by a fluid-operated cylinder 38 having a first end 38a hinged on the holding structure 2 and a second end 38b linked to a portion of the tailpiece 35 spaced apart from the respective hinge 35a.

It is to be noted that the tailpiece 35 of the last unloading station 7, i.e. the farthermost one from the column-shaped portion 8, can be fixed to the interference position and no type of actuator can be required.

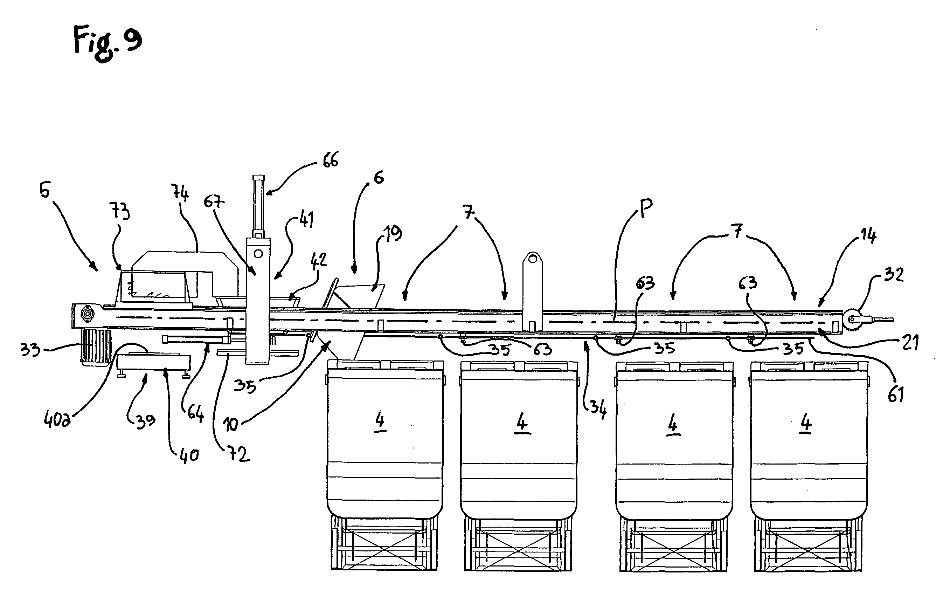

In the second embodiment of the device in question, the tailpiece 35 of each of the overturning members 34a is defined by a cylindrical element. The tailpieces 35, of the same number as the unloading stations 7, are rigidly mounted on at least one common control rod 61, aligned with one of guides 21, and they are oriented with their longitudinal axis disposed horizontally and transversely of the guide 21 itself. The control rod 61 has a plurality of slots 62 in which pins 63 integral with guide 21 are inserted. Each slot 62 has a first length 62a aligned with path P and a second length 62b inclined to the path itself (Fig. 12). The second inclined length 62b extends from one end of the first length 62a to close to shuttle 10. The control rod 61 is moved by an actuator 64, advantageously a fluid-operated cylinder, acting along a direction parallel to the preestablished path P and the longitudinal extension of the control rod 61 (Figs. 9 and 12). During the movement parallel to the preestablished path P determined by actuator 64, sliding of pins 63 along the second lengths 62b of slots 62 causes the control rod 61 and tailpieces 35 to approach shuttle 10. For the purpose, the actuator rod 64a carries a rotatable roller 64b provided with a circumferential groove in which a tailpiece 61a of the control rod 61 is inserted, being oriented transversely of the longitudinal extension of the control rod 61 itself (Fig. 12).

All tailpieces 35 are movable together between the rest position and operating position, at which they interfere with vessel 19 to cause overturning of same. Since all tailpieces move together, the processing and control unit 13 operates actuator 64 only when shuttle 10 is close to the selected station 7. The presence of a control rod 61 for each of guides 21 may be provided.

Advantageously, device 1 further has a device 39 for weighing the waste material loaded in shuttle 10 before transportation towards containers 4.

Preferably, the weighing device 39 comprises a weighing machine 40 that in the first embodiment is placed at the lower portion of the auxiliary stretch P2 of the preestablished path P (Fig. 5), whereas in the second embodiment it is disposed in parallel, close to and under the preestablished path P and the lying plane of the straight guides 21 in the loading station 5.

The weighing machine 40 has a dish 40a on which shuttle 10 is freely laid by gravity, to carry out weighing of the waste material before handling to the unloading stations 7.

Finally, device 1 is preferably provided with a device 41 for pressing the waste material loaded in shuttle 10, which device in the first embodiment preferably operates at the vertical auxiliary stretch P2 of the preestablished path P and in the second embodiment is disposed alongside the loading station 5 on path P. Rubbish compacting advantageously enables the volume of same to be reduced and the amount by weight that can be stowed in each container 4 to be increased.

The pressing device 41 comprises a presser member 42 substantially conforming in shape to vessel 19.

In detail, with reference to the first embodiment in Fig. 5, the presser member 42 is rotatably movable between a disengagement position, at which it is disposed spaced apart from shuttle 10, and an operating position at which it is at least partly inserted in vessel 19 of the shuttle itself, while the latter rests on the weighing machine 40.

In more detail, the presser member 42 is mounted on a lever 43 rotatably installed in column 8 around a hinge 44 and moved by an appropriate actuator 45.

Preferably, actuator 45 of the presser member 42 is defined by a fluid-operated cylinder 46 having a first end 46a linked to column 8 and a second end 46b hinged on one end of lever 43 at an appropriate distance from the respective hinge 44.

To prevent overstressing of the weighing machine 40 components, auxiliary support members may be employed that act under the dish 40a of the weighing machine 40 on which shuttle 10 rests, to bear the efforts transmitted by the presser member 42.

In the second embodiment in Figs. 9-12, the presser member 42 is movable in a linear and vertical direction between the disengagement position and the operating position. In more detail, the presser member 42 is mounted to the end of the rod 65 of a linear actuator 66, a fluid-operated cylinder for example, vertically mounted on a frame 67 rigidly connected to the holding structure 2. Preferably in addition, the presser member 42 has two guide bars 68 parallel to rod 65 and slidably inserted in holes 69 formed in frame 67. Furthermore, frame 67 consisting of four beams 70 such disposed as to form a rectangle lying in a vertical plane (Fig. 12) has a lower portion 71 extending under the lying plane of guides 21. Associated with the lower portion 71 is a support plate 72 substantially coplanar with a bottom surface of shuttle 10 so that it lends itself to act against the latter to counteract the thrust action exerted by presser 42.

Advantageously, as clearly shown in Figs. 1 and 3, the modular portions 2a of the holding structure 2 can have a decreasing-scale extension from the loading station 5 to the farthermost unloading station 7.

Each of the modular portions 2a in fact has a lower sector 47 receiving the respective container 4 and preferably carrying the components of the guide means 14 of shuttle 10, and an upper sector 48 for passage or standing of shuttle 10.

The upper sectors 48 of the modular portions 2a have differentiated heights with respect to each other, and are arranged according to decreasing heights from column 8 towards the last unloading station 7, so that the volume present over shuttle 10 progressively decreases during sliding from the loading station 5 to the last unloading station 7.

This feature is advantageous for rubbish management when said waste materials have different densities and compactness.

In particular, materials such as paper or paperboard that after compression keep a certain degree of resiliency and tend to take the previous volume again brimming over the shuttle opening 20, are advantageously unloaded in the first containers 4 placed at the modular portions 2a having wider upper sectors 48.

Other types of rubbish such as medicaments or batteries that substantially keep the same compactness during transportation, can be on the contrary moved to the last stations 7 without running the risk of creating mechanical interferences with the inner walls of the modular portions 2a during handling of shuttle 10.

Also associated with device 1 may be at least one sight sensor 49, a photoelectric cell for example, capable of identifying the bulkiness of the rubbish portion emerging over shuttle 10. As diagrammatically shown in Fig. 3, each modular portion 2a can be provided with a respective sight sensor 49 mounted close to an inner upper wall 50 and connected with the processing and control unit 13.

If a very bulky waste material intercepts the light beam of one of sensors 49 combined with the unloading stations 7 placed upstream of the one to which the carried waste material is addressed, the processing and control unit 13 operates unloading of shuttle 10 into the container 4 of the first unloading station 7 used as a reject station, so as to prevent clogging of the waste material between the shuttle itself and the inner upper wall 50 of the modular holding portions 2a.

The same reject container 4 can be advantageously also used for receiving the rubbish that has not been identified as adapted to be conveyed to any of the following containers 4 used for the differentiated collection. In this connection, the processing and control unit 13 can be programmed to compare the rubbish weight detected by the weighing machine 40 with a preset maximum value corresponding to the weight that the material selected by user U would have, should it fully take up the shuttle volume; if the two mentioned values are not compatible, the processing and control unit 13 operates release of the waste material itself into the reject container 4.

It may be also provided that each of the inner upper walls 50 of the modular portions 2a be inclined towards the last unloading station 7, following a descending extension, and aligned with the wall of the adjacent modular portion 2a to define a continuous surface 51 to guide the waste material possibly projecting from shuttle 10. In fact, by way of example, if several containers 4 are used for holding paper or paperboard and shuttle 10 has to carry this material to one of the last stations 7, a possible paperboard portion projecting from shuttle 10 without interfering with sensor 49 would be folded down in shuttle 10 by the continuous guide surface 51, thereby avoiding entanglement of the paperboard and consequent stopping of the whole device 1.

Advantageously, to obviate any rubbish clogging within the holding structure 2, the upper sectors 48 can be removably mounted on the respective lower sectors 47 and/or provided with removable lids 52.

In addition, to avoid too bulky rubbish being introduced, the second embodiment of the device in question (Figs. 8, 9 and 10) comprises a cap 73 vertically movable in the loading station 5 between an upper position, at which it lies spaced apart from shuttle 10, and a lower position, at which it rests on the edges of the shuttle opening 20 and delimits the space over the opening 20 itself. Advantageously, cap 73 is connected in a rigid manner by means of arms 74 with the presser member 42 and moved by the latter. Cap 73 has a side opening 75 that, in the lower position, faces and mates door 9 for rubbish conveyance.

As previously said, in addition to the series of containers 4 installed in the holding structure 2, hereinafter referred to as the first series 4', device 1 can also advantageously comprise a second series 4" of containers 4 (Fig. 1).

The containers 4 of the second series 4" are disposed at a lower level as compared with the containers 4 of the first series 4' and are preferably located in an underground space 53 placed under the holding structure 2.

To enable shuttle 10 to unload the waste material into the underground containers 4", at least two containers 4 of the first series 4' are mutually spaced apart and the collecting openings 4a of containers 4 of the second series 4" open between said first-series containers.

Alternatively, device 1 may have a second main stretch extending under the holding structure 2 and over each container 4 of the second series 4".

In the embodiment shown in Fig. 1, the holding structure 2 and the column-shaped portion 8 have a common base 54 provided with openings 55, each of which in the example shown opens into one of the unloading stations 7 interposed between two containers 4 of the first series 4'. The unloading stations 7 provided with openings 55 can possibly be disposed at one or both ends of the preestablished path P.

Base 54 lies flush with the edges 56 of space 53 and the containers 4 of the second series 4" held in the underground space 53 face the openings 55 of base 54.

The modular unloading stations 7 belonging to the containers 4 of the second series 4" are preferably provided with bulkheads 55a converging towards the edges of the respective openings 55. Bulkheads 55a perform the function of directing the waste materials released by shuttle 10 towards the containers of the second series 4".

To allow the containers 4 of the second series 4" to be extracted from the underground space 53, device 1 comprises appropriate lifting means 57. In particular, the lifting means 57 is defined by a platform 58 on which the containers 4 of the second series 4" rest, which platform is moved by suitable hydraulic, pneumatic or fluid-operated means 59, only diagrammatically shown as it is obtained in any convenient manner. Platform 58 is movable between the bottom of space 53 and a position in alignment with the edges 56 of the space 53 itself, flush with the ground.

Base 54 is lifted together with platform 58 and with the holding structure 2 to which it is connected through support beams 60. When lifting has occurred, the containers of the second series 4" lend themselves to be laterally extracted from the space delimited between platform 58 and base 54, for emptying purposes.

Advantageously, as shown in the accompanying drawings, the containers 4 of the second series 4" are bigger than those of the first series 4', to limit the emptying frequency of same, although containers 4 of any size can be utilised.

After describing the invention from a structural point of view, operation of device 1 is as follows.

User U introduces the magnetic badge or other identification device into reader 18 and, once his/her data have been identified, he/she is invited, through a message displayed on display 17 for example, to select from a menu the rubbish type he/she wishes to convey to device 1.

When selection has been completed, the processing and control unit 13 operates opening or unlocking of door 9. Under this condition, in the device of the first embodiment shown in Figs. 1-7, shuttle 10 is placed in the lower part of the substantially vertical auxiliary stretch P2 and rests on dish 40a of the weighing machine 40 (Fig. 1) so that it is easily accessible for rubbish laying.

In the device of the second embodiment shown in Figs. 8-12, shuttle 10 is placed in the loading station 5, resting on dish 40a of the weighing machine 40 and disposed under cap 73. Laying can take place at one or more abutment surfaces 10a present at the lower part of shuttle 10 and consisting of runners 10b for example, fastened to the bottom wall of shuttle 10, so as to interfere by sliding contact with dish 40a when the shuttle comes close to the weighing machine 40. Under this situation, the wheels 26 resting on the second rails 26b are freed from the weight of shuttle 10, the latter being supported by the weighing machine 40 alone. In addition, before unlocking door 9, the processing and control unit 13 causes operation of actuator 66 of the presser member 42 enabling lowering of cap 73 on vessel 19.

The processing and control unit 13, after receiving an enable signal connected with closure of door 9 for example, actuates the weighing machine 40 for weighing the amount of the conveyed waste material and store this datum.

To ensure a correct weighing, elimination of any tensile stress on chain 24 may be provided, through motor 33 for example, so as to enable shuttle 10 to lie heavy with all its weight against the dish 40a of the weighing machine 40. In the embodiment shown in Figs. 8 to 12 it may be also provided that before weighing, lifting of the presser member 42 should be caused upon the action of the linear actuator 66, to bring cap 73 back to the upper position so as to eliminate any contact with vessel 19 and/or the rubbish, which could impair a correct execution of the weighing operation.

Subsequently, if the rubbish typology needs it, as it happens in the case of paper, plastics and/or aluminium containers for example, the processing and control unit 13 causes displacement of the actuator 45, 66 of the presser member 42 from the disengagement position to the operating position, to compact the waste material contained in shuttle 10.

In the device in accordance with the first embodiment pressing takes place with shuttle 10 still close to the weighing machine 40 whereas in the device of the second embodiment shuttle 10, after lifting of cap 73, is moved from the weighing machine 40 to the support plate 72 mounted on frame 67 carrying the presser member 42.

After coming back of the presser member 42 to the disengagement position, motor 33 causes displacement of shuttle 10 along guide 21. In the first embodiment shuttle 10 first travels along the vertical auxiliary path P2 to go over the containers 4 of the first series 4' and subsequently, upon command of the processing and control unit 13, moves horizontally along the main stretch P1 until reaching the unloading station 7 corresponding to the type of rubbish selected by user U.

It will be appreciated that the presence of the vertical stretch P2 allows also very high containers 4 to be utilised, while keeping door 9 at a convenient height for user U.

In the second embodiment shuttle 10 moves only horizontally and above all, if rather high containers are used, the device can be provided with an appropriate raised portion, not shown, placed at the base of column 8 to facilitate the user's access to door 9 that is placed some distance from the ground.

In the device of the first embodiment, before shuttle 10 reaches the selected unloading station 7, the processing and control unit 13 causes operation of the actuator 36 of the overturning member 34a corresponding to such a station 7 so that displacement of the tailpiece 35 to the operating interference position is caused.

In the device of the second embodiment, the processing and control unit 13 causes operation of actuator 64 for displacement of the control rod 61 and all tailpieces 35. It is therefore advantageous for the processing and control unit 13 to know the position of shuttle 10, by an encoder for example detecting the number of revolutions and angular position of the gear wheels 32 over which chain 24 is wrapped, so that said unit may activate the control rod 61 when shuttle 10 has gone beyond the tailpiece 35 preceding the selected unloading station 7.

When shuttle 10 reaches the selected station 7, the pin 37 mounted on the shuttle comes into contact with the tailpiece 35 and, while shuttle 10 is still moving forward, causes rotation of same around axis X. When an inclination sufficient to unload the rubbish has been reached, the processing and control unit 13, by a switch or the above mentioned encoder (not shown) for example, stops moving forward of shuttle 10.

When unloading has occurred, the tailpiece or tailpieces 35 go back to the non-operating position and motor 33 brings shuttle 10 back to the loading station 5, ready for a new cycle.

Thus the processing and control unit 13 stores the number of conveying actions carried out by each user, as well as the type and amount of the conveyed rubbish. The acquired data are stored and then transferred to a magnetic medium for example and/or sent to a remote centre where they can be used for monitoring the behaviour of each user (town dweller) in order to calculate the rates for payment by each family of the rubbish collecting service carried out in a differentiated manner.

The present invention achieves important advantages.

First of all, the automatic device for collecting rubbish in a differentiated manner in accordance with the present invention allows use of a great number of containers and is therefore able to receive many types of rubbish, while simultaneously maintaining a high automation degree.

In fact, since the only device portion in motion is the transportation shuttle, there is practically no limit to the number of usable containers and arrangement of same; the shuttle path is each time planned based on the specific requirements. In this connection it will be appreciated that the modular character of the unloading stations enables construction of devices of several different shapes and sizes with ease.

Furthermore, irrespective of the structures that can be obtained, the user is always interfaced with the same machine portion and with one door alone for rubbish admission. The device in question can receive containers with different cubic volumes that can be employed based on the estimated rubbish production for each type. Emptying or replacement of the surface containers is quick and easy irrespective of the position of same because the holding structure has an access door dedicated to each container.

The device subject of the present invention allows utilisation of the urban space to be optimized through provision of structures at several levels, some at the ground level and some under the ground level.

Finally, the device of the invention is provided with particular expedients making it reliable and strong.

The device as conceived is susceptible of many modifications and variations, all of them falling within the scope of the inventive idea characterizing it. All of the details may be replaced by other technically equivalent elements and practically all the materials used, as well as the sizes can be of any nature and magnitude depending on requirements.

## Claims

1. An automatic device for collecting rubbish in a differentiated manner, comprising:
- a plurality of rubbish containers (4);
- rubbish transferring means (6) to carry the rubbish between a loading station (5) and a plurality of unloading stations (7), each disposed at one of said containers (4);
- data acquisition means (11) to acquire at least one datum relating to the type of waste material conveyed to the device in the loading station (5);
- a processing and control unit (13) operatively connected with the data acquisition means (11);
wherein the transferring means (6) comprises:
- at least one transportation shuttle (10) movable along a preestablished path (P) between the loading station (5) and the unloading stations (7); and
- guide and handling means (14) to move the shuttle (10) along the preestablished path (P) and connected to the processing and control unit (13) to discharge the waste material into one of the containers (4) selected on the basis of said at least one datum relating to the type of the conveyed waste material.

2. A device as claimed in claim 1, wherein the shuttle (10) comprises a vessel (19) having at least one loading and unloading opening (20).

3. A device as claimed in claim 1, wherein the shuttle (10) is movable along a main stretch (P1) of the preestablished path (P) over the plurality of containers (4); each of said containers (4) having a collecting opening (4a) at the upper part thereof.

4. A device as claimed in claim 3, further comprising overturning means (34) to move the shuttle (10) between a loading and transportation position at which a loading and unloading opening (20) thereof faces upwardly, and an unloading position at which the shuttle (10) is angularly rotated with respect to the loading and transportation position, to cause unloading of the waste materials into the collecting opening (4a) of the selected container (4).

5. A device as claimed in claim 4, wherein the overturning means (34) comprises a plurality of overturning members (34a), each of them being mounted at a container (4) to move the shuttle (10) around a horizontal rotation axis thereof (X).

6. A device as claimed in claim 5, wherein each of the overturning members (34a) comprises a tailpiece (35) movable between an operating position, at which it lends itself to interfere with the shuttle (10) to cause rotation around said horizontal rotation axis (X), and a rest position of non-interference with the shuttle (10).

7. A device as claimed in claim 1, wherein said containers (4) are inserted in a holding structure (2) having a plurality of access doors (3) to pick up the containers (4) themselves.

8. A device as claimed in claim 1, wherein the containers (4) are placed in an underground space (53).

9. A device as claimed in claim 8, further comprising means (57) for lifting the containers (4) out of the underground space (53).

10. A device as claimed in claim 1, having a first series (4') of containers (4) in mutual alignment and a second series (4") of containers (4) in mutual alignment that are disposed at a lower level than the containers (4) of said first series (4').

11. A device as claimed in claim 10, wherein the unloading stations (7) corresponding to the containers (4) of the second series (4") each have routing bulkheads (55a) terminating at an opening (54) facing the collecting opening (4a) of the respective container (4) of the second series (4").

12. A device as claimed in claim 10, wherein the containers (4) of the first series (4') are inserted in a holding structure (2) having a plurality of access doors (3) for picking up said containers (4) of the first series (4'), and the containers (4) of the second series (4") are placed in an underground space (53) disposed under the holding structure (2).

13. A device as claimed in claim 12, further comprising lifting means (57) to move the containers (4) of the second series (4") out of the underground space (47).

14. A device as claimed in claim 3, wherein the shuttle (10) is also movable along a substantially vertical auxiliary stretch (P2) of the preestablished path (P) disposed at the loading station (5).

15. A device as claimed in claim 1, wherein the guide and handling means (14) of the shuttle (10) comprises at least one guide (21) extending along the preestablished path (P) and means (22) for hooking the shuttle (10) on the guide (21), to slidably engage the shuttle (10) in the guide (21).

16. A device as claimed in claim 15, wherein the guide and handling means (14) of the shuttle (10) further comprises a handling chain (24) connected to the shuttle (10) and moved by a motor (33).

17. A device as claimed in claim 16, wherein the means (22) for hooking the shuttle (10) on the guide (21) comprises a carriage (23) slidably inserted in the guide (21), rotatably coupled with the shuttle (10) around a horizontal rotation axis (X) and rigidly connected to the handling chain (24).

18. A device as claimed in claim 1, further comprising a weighing device (39) for the rubbish loaded in the shuttle (10).

19. A device as claimed in claim 18, wherein the weighing device (39) comprises a weighing machine (40) located at a lower portion of a substantially vertical auxiliary stretch (P2) of the preestablished path (P), to allow laying of the shuttle (10) on the weighing machine (40) and weighing of the waste material before moving it to the unloading stations (7).

20. A device as claimed in claim 1, further comprising a pressing device (41) to compress the rubbish loaded in the shuttle (10).

21. A device as claimed in claim 20, wherein the pressing device (41) is operatively active on the shuttle (10) at a substantially vertical auxiliary stretch (P2) of the preestablished path (P).

22. A device as claimed in claim 19, further comprising a pressing device (41) having a presser member (42) rotatably movable between a disengagement position, at which it is moved away from the shuttle (10) and an operating position at which it is at least partly inserted in said shuttle (10) when the shuttle rests on the weighing machine (40).

23. A device as claimed in claim 1, further comprising a user interface (12) having means (15) to identify the user (U).

24. A device as claimed in claim 23, wherein the holding structure (2) has a column-shaped portion (8) containing the user interface (12), the processing and control unit (13), a pressing device (41) and a weighing device (39); the column-shaped portion (8) further having a door (9) for conveying the rubbish to the transportation shuttle (10).

25. A device as claimed in claim 15, wherein the guide (21) is formed of a plurality of modules (21a) each of them being associated with an overturning member (34a) of the shuttle (10) and with a container (4) to define respective modular unloading stations (7).

26. A device as claimed in claim 7 or 12, wherein the holding structure (2) is formed of a plurality of modular portions (2a) each of them being associated with an unloading station (7).

27. A device as claimed in claim 26, wherein the modular portions (2a) have respective upper sectors (48) arranged according to decreasing heights from the loading station (5) to the furthermost unloading station (7).

28. A device as claimed in claim 26, further comprising at least one sight sensor (49) connected with the processing and control unit (13) and operatively active in each of the upper sectors (48) to identify the bulkiness of the rubbish projecting from the shuttle (10).

29. A device as claimed in claim 27, wherein the upper sector (48) of each modular portion (2a) further has a removable lid (52).

30. A device as claimed in claim 27, wherein the upper sector (48) of each modular portion (2a) has an inner upper wall (50) inclined towards the last unloading station (7) and aligned with the inner upper wall (50) of the adjacent modular portion (2a), to define a continuous guide surface (51) for the rubbish projecting from the shuttle (10).

31. A device as claimed in claim 1, wherein the container (4) which is the closest to the load station (5) is used for collecting the reject rubbish.

32. A device as claimed in claim 6, wherein the overturning means (34) comprises a control rod (61), the tailpieces (35) thereof being rigidly mounted on said control rod (61).

33. A device as claimed in claim 1, wherein the guide and handling means (14) of the shuttle (10) comprises two mutually parallel guides (21) disposed at the opposite sides of the shuttle (10) and means (22) for hooking the shuttle on the guides (21).

34. A device as claimed in claim 33, wherein the preestablished path (P) substantially extends in a horizontal plane.

35. A device as claimed in claims 18 and 33, wherein the weighing device (39) comprises a weighing machine (40) disposed at an underlying position with respect to the preestablished path (P) in order to interfere in sliding contact relationship with the shuttle (10) so as to allow laying of said shuttle on the weighing machine (40).

36. A device as claimed in claim 20, wherein the pressing device (41) is disposed alongside the loading station (5) on the preestablished path (P).

37. A device as claimed in claim 20, wherein the pressing device (41) comprises a presser member (42) linearly movable between a disengagement position, at which it is moved away from the shuttle (10), and an operating position, at which it is at least partly inserted in said shuttle (10), when the shuttle (10) rests on a support plate (72).

38. A device as claimed in claim 1, further comprising a cap (73) movable in the loading station (5) between an upper position at which it is spaced apart from the shuttle (10) and a lower position at which it is close to the shuttle (10) and delimits a space over said opening (20); the cap (73) having a side opening (75) facing a door (9) for conveyance of the rubbish when the cap (73) is in the lower position.

39. A device as claimed in claims 36 and 38, wherein the cap (73) is carried and moved by the presser member (42).
